# EUROPEAN PATENT APPLICATION

(11) **EP 4 576 021 A1**
(43) Date of publication of application: **25.06.2025**
(21) Application number: 23219408.4
(22) Date of filing: 21.12.2023
(51) Int. Cl.: G06V 20/52

(54) **COMPUTER IMPLEMENTED METHOD FOR DETECTING, TRACKING AND COUNTING PASSING PEOPLE BASED ON CAMERA IMAGES**

(71) Applicant: Yoberi Sp. z o.o., 00-819 Warszawa (PL)
(72) Inventor: Jarosinski, Jakub, 02-743 Warszawa (PL); Gaska, Michal, 03-982 Warszawa (PL); Smolinska, Natalia, 81-577 Gdynia (PL)
(74) Representative: Jedrzejewski, Michal

(57) **Abstract**

Computer-aided method for detecting, tracking and counting the persons passing through based on the depth camera and RGB camera images.

## Description

The subject of invention is computer-aided method for detecting, tracking and counting the persons passing through based on the camera images.

From the state-of-the art, following publications are known:
1) In CN115690691 patent publication method and system for train passenger flow counting based on TOF (Time of Flight) was disclosed, method including following steps:
   collection of the depth images of pedestrians passing through the train doors by the TOF camera and performing pre-processing of the depth images;
   constructing training evaluation data set based on TVhead data set, pedestrian detecting processing is performed by means of YOLOv3, and lightweight processing is performed on skeleton structure, neck structure and net parameters; pedestrian moving track obtaining through pedestrian tracking processing based on pedestrian detecting processing result; analysing moving track, pedestrian track direction is obtained, and number of persons entering and exiting the vehicle doors is counted and collected in real time. According to this method, the TOF camera is adapted to collect the depth images and optimize depth images, difficulty of pedestrian detecting is reduced, image data quality is improved, in the meantime, two-stage pedestrian flow counting algorithm was established, the pedestrians can be quickly and accurately detected and tracked, system can cope with complex scenes and method has high speed operation and ability to adapt to environment.
2) In CN115423840 patent publication, method for fast personnel access counting based on the depth camera and belonging to technical field of machine vision algorithms was disclosed. According to invention, regular information on depth is obtained by the depth camera without calibration; iterative adaptive segmentation is carried out on each frame, the persons are searched one by one, and three-dimensional coordinate values of cloud points are entered, due to which the problem that front and rear persons are obscured because of the camera installing inclination is avoided, it is possible the person loss during tracking may be avoided, method is adequate for complex scenes such as great difference in height of pedestrians, mutual inclination and person's obscuring from front and rear, and process is simple, stable and reliable; whole process relies on two-dimensional regular data on depth processing and high time complexity algorithm does not exist due to which operation speed is high and real-time performance is high.
3) In CN114927080 patent publication, smart advertising machine capable for automatic counting the person flow and analyzing advertising effect in real time and relating to advertising machine technical field was disclosed, smart advertising machine consists of advertising machine body, wherein display screen is mounted on the front side of advertising machine body, and the first camera is mounted on the front internal advertising machine body; the second camera is embedded in the front internal advertising machine body, device for face recognizing is installed in advertising machine body and situated on the back of display screen, the lower side of device for face recognition is connected to the first connecting line and the lower end of the first connecting line is connected to the device for face matching. By deployment of the first camera and two groups of the second cameras when persons are standing facing advertising camera, information on the depth generated by the first camera and two groups of the second cameras can automatically identify whether persons passing through are watching advertising, features such as facial expression and degree of visual concentration are analyzed and advertising effect is automatically analyzed.
4) In CN114882404 patent publication, method and system of the persons entering and exiting in real time based on depth camera and belonging to technical field of machine vision algorithms was disclosed. According to this method, for each frame, frame is scanned in accordance with defined scanning step length to obtain set of pixel points, whole frame does not have to be scanned, and algorithm time complexity is significantly reduced; current value of the shortest head position of the next frame is obtained from the current frame, the shortest head position is updated in real time and precision thereof is good; self-adaptive segmentation is performed on each frame, wherein loss of the frames during tracking may be avoided, this method is suitable for complex scenes such as great difference in pedestrian height and mutual pedestrian inclination, and process is simple, stable and reliable; and matching of potential set of head areas from historical frame with potential set of head areas from current frame using generalized distance to create potential set of head areas from historical frames of the next frame, updating of potential head regions which are continuously matched to be real in head areas and updating of head area set in real time.
5) In CN110717408 patent publication, method of person flow counting based on TOF camera which includes following steps: 51, acquisition of set of human head detection samples TOF; S2, training of human head detecting model; S3, the depth image processing; S4, processing unit dividing; S5, processing unit detection; S6, matching of human head area and tracking; and S7, route analysis performing and pedestrian volume acquiring was disclosed. According to invention, drawbacks of false algorithm detection high rate of single detection and easy aim loss of tracking algorithm were overcome through detecting and tracking combination. In this method precision monitoring and spatial person flow analysis in real time may be effectively performed, and has very high practical utility value for evaluating the attendance rate at classes and degree of carriage crowding and other scenes requiring statistics on the number of people present on site, improves statistical efficiency and saves costs of workforce analysis.

In the state-of-the art known, there are no solutions that would simultaneously enable object selection (distinguishing, among others, between humans and animals) and tracking an object through its entire travelled route and classifying it based on trajectory thereof.

Above problems are solved by method according to invention.

Computer-aided method for detecting, tracking and counting persons passing through based on camera image according to invention is characterized in that:
1) depth camera image is segmented, filtered, wherein filtration relies on that area situated near floor is excluded, what allows only new objects moving across area under study to be detected,
2) individual points of local maxima with three-dimensional area that is the depth map obtained from the depth camera, in result of which representation of an object having physical form is obtained, and then extracting the vertex thereof are detected which allows between two figures standing close to each other to be distinguished,
3) obtained vertices and sizes thereof are processed and analyzed and elements not having defined parameters are filtered, thereby majority of random objects which are registered by the depth camera during artefact effect occurring at depth image readout is excluded,
4) detected objects are classified, routes thereof are tracked and collisions among them are recognized, for this purpose algorithm based on Kalman's filtration to perform object route approximation is utilized what allows future object positioning point to be determined, and then comparison of current object position with approximation is performed, whereas deviation from the result is utilized for algorithm as feedback,
5) after obtaining appropriate number of algorithm warmup steps, an identifier is assigned to the moving points and then overall route of the object passage across area under study is determined,
6) after obtaining the list of objects and location thereof in the area under study, the neural network model is analyzing the RGB camera image, performing detection and classification operations of the objects located in the area under study,
7) obtained data is queued and stored in memory,
8) during phase of overall route passage analysis which occurs after object exiting the area under study, detection statistics including both certainty of object type recognition and type of recognized object as well is calculated, if these values are consistent through majority of time of flight, given object is classified as human and passage thereof is appropriately flagged in database, in result of which percentage of incorrectly classified passages is defined and this value is displayed for user on control panel.

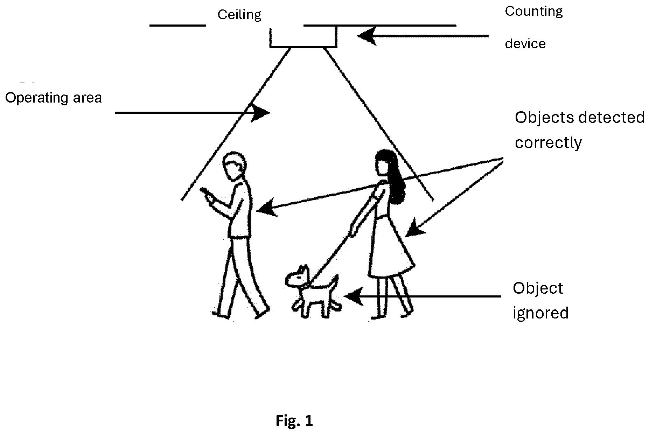

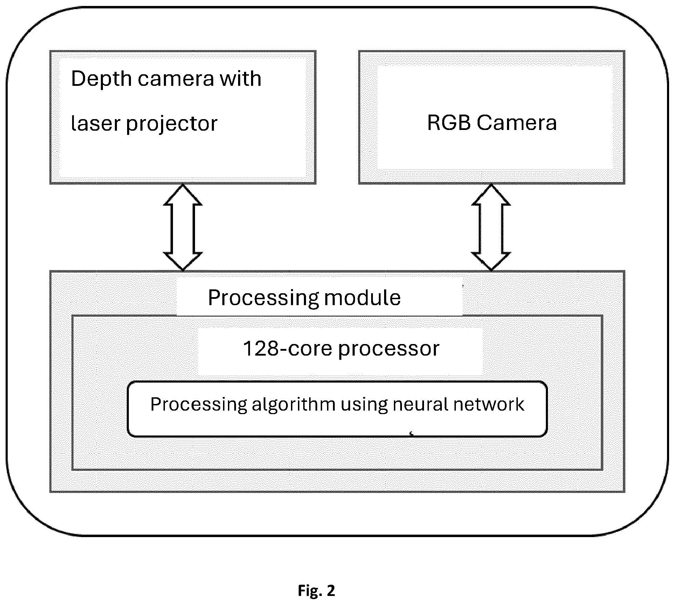

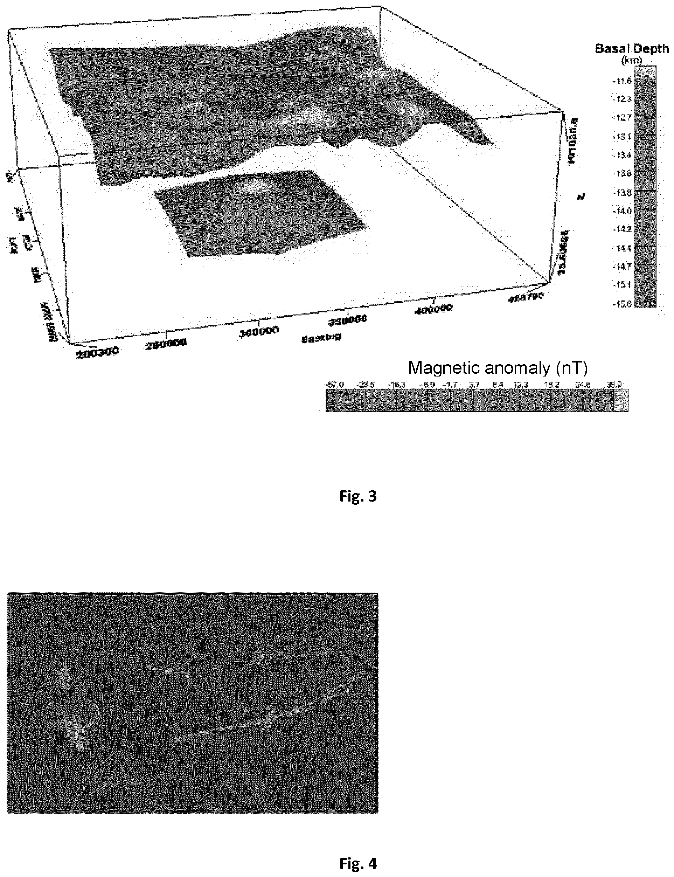

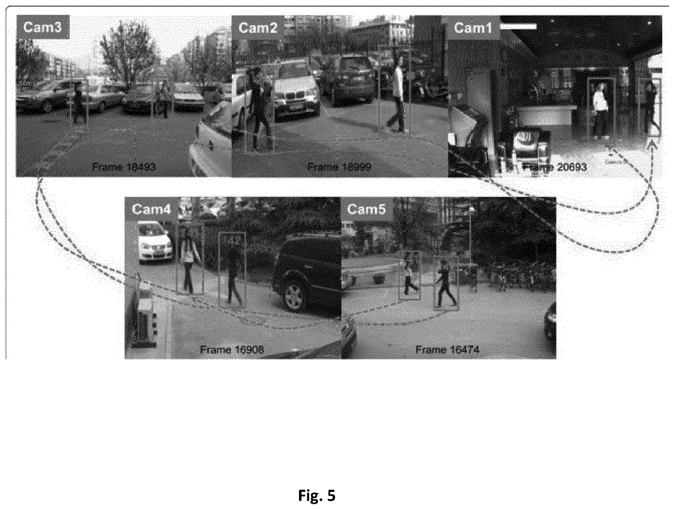

Object of invention is shown as example in drawing on which fig. 1 shows schematically method operation according to invention, fig. 2 shows schematically construction of devices utilized in method according to invention, fig. 3 shows visualization of the depth map peaks enabling vertices to be found, fig. 4 shows visualization of object tracking and identification system, while fig. 5 shows visualization of human detection principle on the RGB camera image.

Computer-aided method for detecting, tracking and counting the persons passing through based on camera images was described below herein.

Method for detecting, tracking and counting the persons passing through based on camera images is operating on 2 planes. The first step is the depth camera image utilizing, segmentation, filtration thereof and finding objects for tracking. Obtained image filtration so as to exclude area situated near floor what allows only new objects moving across area under study to be detected is the first element. Detection of individual local maxima points with three-dimensional area which is depth map from depth camera is subsequent step. It allows representation of object having physical form to be detected and then extraction of vertex thereof. This proceeding allows two figures standing closely to each other to be distinguished.

Processing of obtained vertices, analysis of magnitude thereof and filtration of elements not situated within defined parameters is the subsequent step. This proceeding excludes majority of random objects which are registered by the depth camera during effect of artefact occurring at depth image readout, it means, flashing lights, strongly reflective surfaces. The last element of moving object tracking is whole process of detected objects classifying, route tracking thereof and collision recognition between them.

Specialized algorithm based on Kalman's filtration to perform object route approximation is used for this purpose, what allows future object position point to be defined, and then comparison of current object position with approximation. Error obtained in this step is then entered into equation so that algorithm is "aware" how wrong it was. After obtaining appropriate number of algorithm warmup steps, the process is capable to assign identifier to the moving points and then determine the overall route of the object's passage across area under study.

Whole system of object tracking based on the depth map is sufficient to analyze the flow of objects passing across area under study. The algorithm, on the other hand, is not capable to determine whether moving object is human. Method second part uses specially trained neural network allowing to identify whether moving object is a human. For this purpose, the target window is generated by first part of application based on depth image analysis. After obtaining the object list and positioning thereof in the area under study, neural network model is analyzing the RGB camera image, performing detection and classification operation of objects present in the area under study. Then, this data is queued and stored in memory. During analysis phase of the overall passage route which follows exiting of the surveyed object from the surveyed area, detection statistics is calculated including both the model's "certainty" in recognizing the type and kind of object recognized as well. If these values are consistent through majority of time of flight, given object is classified as human and passage thereof is appropriately flagged in database. Due to which, misclassified passage percentage determining and displaying these values to user on control panel is possible.

## Claims

1. Computer-aided method for detecting, tracking and counting the persons passing through based on camera images, **characterized in that:**
1) the depth camera image is segmented, filtered, filtration relying on that area situated near the floor is excluded what allows only new objects moving across the area under study to be detected,
2) individual local maxima points with three-dimensional area that is depth map obtained from the depth camera in result of which representation of object having physical form is obtained, and then extracting vertex thereof what allows two figures standing close to each other to be differentiated,
3) obtained vertices are processed and magnitude thereof is analyzed and elements not having defined parameters are filtered due to which random objects majority which are registered by the depth camera during artefact occurring effect in image depth readout is excluded,
4) detected objects are classified, routes thereof are tracked and collisions between them are recognized, to perform object route approximation for this purpose algorithm based on Kalman's filtration is utilized what allows future object positioning to be determined and then comparison of current object positioning with approximation is performed, whereas deviation from result is utilized for algorithm as feedback.
5) after obtaining appropriate number of algorithm warmup steps, an identifier is assigned to the moving points and then overall route of the object passage across area under study is determined,
6) after obtaining the list of objects and location thereof in the area under study, the neural network model is analyzing the RGB camera image, performing detection and classification operations of the objects located in the area under study,
7) obtained data is queued and stored in memory,
8) during phase of overall route passage analysis which occurs after object exiting the area under study, detection statistics including both certainty of object type recognition and type of recognized object as well is calculated, if these values are consistent through majority of time of flight, given object is classified as human and passage thereof is appropriately flagged in database, in result of which percentage of incorrectly classified passages is defined and this value is displayed for user on control panel.
